# EUROPEAN PATENT SPECIFICATION

(11) **EP 3 192 358 B1**
(45) Date of publication and mention of the grant of the patent: **15.04.2020**
(21) Application number: 16205673.3
(22) Date of filing: 21.12.2016
(51) Int. Cl.: A01K 1/035, A01K 1/03, A01K 7/06, A01K 39/02

(54) **MINK FARMING SYSTEM**
NERZZÜCHTUNGSSYSTEM UND TRÄNKEVENTIL DAFÜR
SYSTÈME D'ÉLEVAGE DE VISONS ET VALVE D'ABREUVOIR POUR CECI

(30) Priority: 22.12.2015 DK 201500833
(43) Date of publication of application: 19.07.2017
(60) Divisional application: 18170893.4
(73) Proprietor: Hedensted Gruppen A/S, 8722 Hedensted (DK)
(72) Inventor: Madsen, Jens Jørgen, 5220 Odense SØ (DK); Christiansen, Kim, 5464 Brenderup (DK)
(74) Representative: COPA Copenhagen Patents

(56) References cited:
- EP-A1- 2 807 917
- EP-A1- 2 839 737
- CA-A- 849 845
- DK-U3- 200 500 052
- DK-U3- 201 300 042
- NL-A- 8 901 324

## Description

The present invention relates to a mink farming plant comprising:
- at least one longitudinal row of mutually laterally spaced mink cages, each having a front wall, a rear wall, a top wall, a bottom wall and opposite side walls, at least the side walls being wire-mesh walls with intersecting mesh wires defining mesh openings, preferably rectangular mesh openings, with a mesh width and a mesh height, and each cage having an inner side facing the interior of the cage and an outer side facing outwards, and where a nest box is attached to the front wall, the nest box having a nest box bottom and a nest box rear wall with a nest box opening, such as a circular opening, of such a size that both the kits and the full-grown minks are free to move between the nest box and the cage,
- a drinking water line running along the row of cages, said line being part of a drinking water system, preferably a drinking water circulation system, comprising a pressure inducing means, such as a pump, for supplying the drinking water line with water under pressure.

Such a plant comprising a drinking water valve connected to the drinking water line is commonly known from practically all mink farms. The drinking water valves typically have a horizontal activating pin effecting, when depressed, that that valve supplies water and are typically arranged on the rear wall of the cages. This is an advantageous position for adult minks as they move freely around in the case, and as they typically, besides drinking, also defecate in the rear area of the cage. Moreover, in this area below the cages, a slurry gutter is typically arranged. However, this positioning of a drinking water valve is not particularly suitable for the kits as the kits start eating food approx. 4 weeks after birth. After this period and until week 7-8, the kits need large amounts of water but are not comfortable leaving the nest box or moving too long a distance from the nest box and especially all the way to the drinking valve on the rear wall of the cage. This results in some kits consuming too small amounts of water and thus not surviving or in the kits straining the female adult mink by her having to provide water to them from her mouth, which may result in the female mink not surviving. To remedy the above problems, it has been suggested to place water bowls on the floor of the cage, to arrange drinking valves in the nest box and arrange so-called rabbit waterers on the top wall of the cage or the nest box. The former suggestion has the disadvantage that a relatively high amount of water is discharged in the relatively small nest box due to the activity of the kits, and the nest box thus becomes moist, which may cause health issues, and it also has the disadvantage that the kits do not become accustomed to leaving the nest box and drinking from the drinking water valve on the rear wall. The second suggestion has the disadvantage that the kits climb into the bowls, thus contaminating the water and the cage. Moreover, it is inconvenient and time-consuming to change and refill the bowls with water. The latter suggestion has the disadvantage that it is inconvenient and time-consuming to fill water in the containers of the rabbit waterers, and that the kits are not supplied with fresh water unless the water in the containers are changed rather frequently.

EP 2 839 737 A1 discloses a mink farming plant as stated in the preamble of claim and described above and wherein the drinking water line is connected with a drinking valve arranged in the nest box. As mentioned above this solution has the disadvantage that a relatively high amount of water is discharged in the relatively small nest box due to the activity of the kits, and the nest box thus becomes moist, which may cause health issues, and it also has the disadvantage that the kits do not become accustomed to leaving the nest box.

DK 2005 00052 U3 discloses a nest box configured to a mink cage and comprising a drinking valve on the inner side thereof facing the nest box, i.e. the drinking valve is arranged in the nest box. The disadvantage of such an arrangement is mentioned above.

DK 2013 00042 U3 discloses a drinking valve configured to be fastened to a wire mesh wall of a mink cage. The valve comprises an inlet to be connected to a water line extending along the cage and an outlet being opened by activating a horizontally extending activating pin.

NL 8 901 324 A discloses a drinking valve configured to be connected to a wire mesh wall of a cage. The valve comprises an outlet being opened by activating a horizontally extending activating pin and an inlet connected to a water line extending along the cage.

CA 849845 A discloses a similar valve as DK 2013 00042 U3 and NL 8 901 324 A.

EP 2 807 917 A1 discloses a mink farming plant comprising a row of wire mesh cages and a water line extending along the row of cages. Each cage is provided on the inside with an open container being supplied with water through the water line.

The object of the invention is to remedy or solve the above disadvantages and problems, including especially that the kits are supplied with fresh water and become accustomed to drinking from drinking water valves and move into the cage as well as start drinking from the drinking valve on the rear wall.

In order to achieve the above object the mink farming plant according to claim 1 comprises a drinking valve with an inlet being arranged and secured on the inner side of one of the side walls of the cages outside the nest box , the inlet of said drinking valve being connected to the drinking water line via a branch-off line branched off from said drinking water line, said drinking water valve further comprising a downward-facing outlet and, in connection therewith, a downward-facing protruding activating pin, and where the valve is configured for being opened by a light axial and/or lateral touch or force applied on the activating pin resulting in the value supplying water at the least in the form of a drop of water, said activating pin having a lower end positioned 1 to 8 cm, such as 2 to 6 cm, or 3 to 5 cm, above the bottom wall of the cage and in a distance to the nearest point of the edge of the nest box opening of no more than 20 cm, such as of no more 15 cm, no more than 12.5 cm or no more of 10 cm.
By arranging a drinking water valve close to the nest box opening in the cages, the kits will relatively early on move towards the valve and touch the activating pin of the valve either intentionally or unintentionally when they touch it as it is positioned at a low level and faces downwards such that water is supplied at least in the form of a drop of water, and they will then quickly experience and learn that water is supplied by touching the activating pin. Moreover, supplying water to the drinking valves from a drinking water line connected to a drinking water system, preferably a drinking water circulation system, ensures that fresh water is continuously supplied by the valves when activated. The drinking water system may further comprise a water tank to which a supply line and a return line are connected, and where the water line and optionally further water lines are connected in parallel between the supply and return lines.

The drinking water line or the drinking water lines may run along the underside of the cages, along the upper side of the cages or along the rear side or the front side of the cages. At present, it is preferred that the drinking water line runs along the underside of the cages and preferably vertically below the drinking valves to ensure that the distance from the branch-off lines to the valves is as short as possible.

The drinking valve may be arranged such that the downward-facing activating pin forms an angle of between 0 and 45°, such as between 0 and 30° or between 0 and 15°, relative to vertical.

According to an embodiment, the valve is connected to the branch-off line via a coupling element with a connecting channel connecting the inlet of the valve to the interior of the branch-off line.

The valve of the coupling element connected to the value may be secured by a clamp, secured to the wire-mesh wall by secured engagement with mesh wires of the wire-mesh wall.

According to a further embodiment of the invention, the branch-off line branched off from the drinking water line is positioned in the space defined by the side wall on which the valve is arranged and the adjoining side wall of the adjacent cage in the row of cages. In this way, the branch-off line does not take up space in the cage and the minks cannot come into direct contact with said branch-off line and possibly damage or brake it.

According to a preferred embodiment of the invention, part of the coupling element extends through a mesh opening in the side wall.

Furthermore, according to an embodiment, a portion of the part of the coupling element extending through a mesh opening in the side wall may have an outer profile that substantially corresponds to the shape of the mesh opening and fits closely therein.

This ensures in a simple way that the valve is positioned in the desired position where the activating pin faces downwards.

An outer profile substantially corresponding to the shape of the mesh opening should be interpreted broadly and covers both the fact that said profile is substantially identical to the shape of the mesh opening and that the cross-section of the portion of the part extending through the mesh opening has protrusions, such as bosses or ribs, ensuring that it fits substantially closely into the mesh opening.

According to an embodiment of the invention, the coupling element in connection with the part of the coupling element extending through the mesh opening has a flange, a chest or protruding area abutting against at least two opposite mesh wires on the inner side of the side wall.

In a presently preferred embodiment, the connection between the coupling element and the branch-off line comprises a male part on the coupling element, said male part being sealingly and detachably connected to a female part on the branch-off line or vice versa.

The aforementioned connection between a male part and a female part may e.g. be a threaded connection, e.g. a thread with a large pitch, or a bayonet coupling connection.

The connection between the male part and the female part can further be configured to move an area or several areas of the coupling element and the branch-off line towards each other to secure engagement with an area of the intervening wire mesh. In this way, a simple securing of the valve to the wire of the side wall is obtained.

According to an advantageous embodiment, the branch-off line comprises a tube element provided with the female part that is sealingly and detachably connected to the male part on the part of the coupling element extending through a mesh opening or vice versa.

According to a further embodiment of the invention, the coupling element has a downward-facing female part, and the tube element is substantially T-shaped with an oblong body, which, at a first and upper end, has a male part engaging said female part or vice versa, and, at an opposite second and lower end, has laterally protruding arms connected to the water line, and where at least a part, such as a lateral protruding part of the body, abuts the outer side of the wire-mesh wall.

A valve arrangement useable for being arranged and secured on a wire-mesh wall with mesh openings in a mink farming plant comprises:
- a drinking valve with an inlet at a first end and an outlet at a second opposite end and a protruding activating pin positioned in connection with the outlet, and where the valve is configured to open the value by a light axial and lateral touch or force applied on the activating pin to supply liquid in the form of at least one drop of liquid,
- a coupling element comprising a transverse part in relation to the longitudinal axis of the activating pin of the valve, said transverse part having a first section in which the valve with a protruding activating pin is arranged, and a second section which is arranged for insertion into a mesh opening and which is separated from the first section by a protruding flange, chest or protruding area having a transverse dimension larger than the transverse dimension of the mesh opening, and where the transverse part has an interior connecting channel being, at one end, in liquid connection with the inlet of the valve and being, at a second opposite end, provided with a coupling element inlet with a connecting means, and
- a tube element with an oblong body having at a first free end, a tube element outlet with a connecting means configured for being sealingly and detachably engaged with the connecting means of the coupling element inlet, and preferably having at an opposite, second end opposing laterally protruding arms with inlets at the opposite ends of the arms, the tube element thus being substantially T-shaped.

It should be noted that instead of protruding arms at the second opposite end, the oblong body may have a tube element inlet with a connecting means arranged for being connected to a corresponding connecting element on a drinking water line.

The second section of the transverse part of the coupling element adjacent the flange can have a portion or area with an outer outline with a height and/or width corresponding to the height and/or width of the mesh opening.

In this way, said portion or area provides a control and positioning of the coupling element in the mesh opening by inserting the second section of the transverse part of the coupling element.

The coupling element inlet of the coupling element and the connecting means thereof can have an axis substantially parallel to the longitudinal axis of the activating pin of the valve, and the tube element outlet of the T-shaped tube element and the associated connecting means can be an axial outlet in the first free end of the body of the tube element.

Alternatively, the coupling element inlet of the coupling element and the connecting means thereof can have an axis substantially perpendicular to the longitudinal axis of the activating pin of the valve, and the tube element outlet of the T-shaped tube element and associated connecting means can be a radial outlet in the body of the tube element which has a closed first free end.

The above-mentioned connecting means of the coupling element and the tube element that are configured for being sealingly and detachably mutually engaged is preferably of the type interacting male part and female part, such as threaded engagement or bayonet coupling engagement.

The coupling element and the tube element as well as the connecting means of the coupling element and the tube element can be configured to move an area or several areas of the coupling element and the tube element against each other for secured engagement with an area of the intermediate wire mesh when said connecting elements are in coupled engagement with each other.

### DETAILED DESCRIPTION

The invention is described in more detail below with reference to the drawings, in which:
Fig. 1 is a schematic and top view of a mink farming plant according to the invention comprising a number of mutually laterally spaced cages with wire-mesh walls and nest box with a nest box opening arranged on the front wall of each cage as well as a drinking water line running along the row of cages, said line being part of a drinking water system,
Fig. 2 is a schematic view and rear view of a section of a row cages,
Fig. 3a is in a larger scale a schematic rear perspective view of a section of the front cage with attached nest box shown in Fig. 1 as well as a first version of a dinking valve arrangement which is connected to the drinking water line and comprises a drinking valve arranged in the cage,
Fig. 3b is in a larger scale side view of the cage shown in Fig. 3a and a section of a neighbour cage,
Fig. 3c is a perspective view of the tube element of the drinking valve arrangement shown in Figs. 3a and 3b, said tube element being adapted at a bottom end for being connected with the drinking water line and at an upper end for being connected with the coupling element with drinking valve shown in Figs. 3d og 3e, said coupling element with drinking valve being part of the drinking valve arrangement,
Fig. 3d is in a larger scale a perspective view of the coupling element with drinking valve viewed under a first angle,
Fig. 3e shows the coupling element with drinking valve shown in Fig.3d seen in perspective under a second angle,
Fig. 4a is a depiction corresponding to Fig. 3a, but with a second version of a drinking valve arrangement,
Fig. 4b is a depiction corresponding to Fig. 3b, but with the second version of a drinking valve arrangement shown in Fig. 4a,
Fig. 5a is a depiction corresponding to Fig. 3a, but with a third version of the drinking valve arrangement,
Fig. 5b is a depiction corresponding to Fig. 3b, but with the second version of a drinking valve arrangement shown in Fig. 5a.
Fig. 5c is in a larger scale a perspective view of the third version shown in Figs. 5a and 5b.

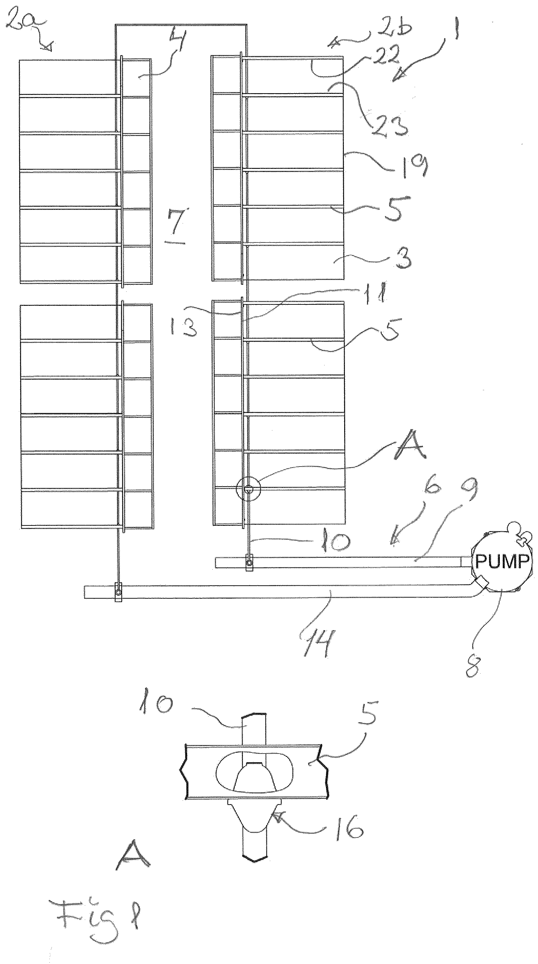

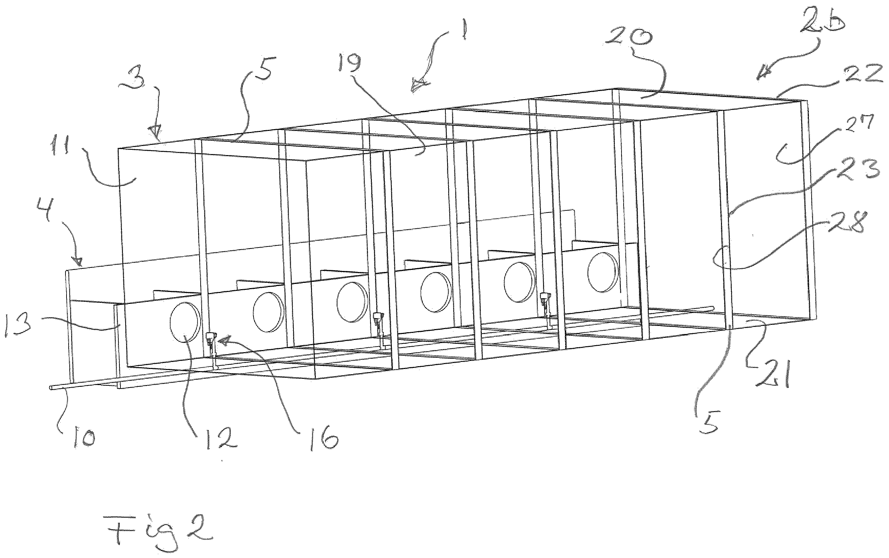

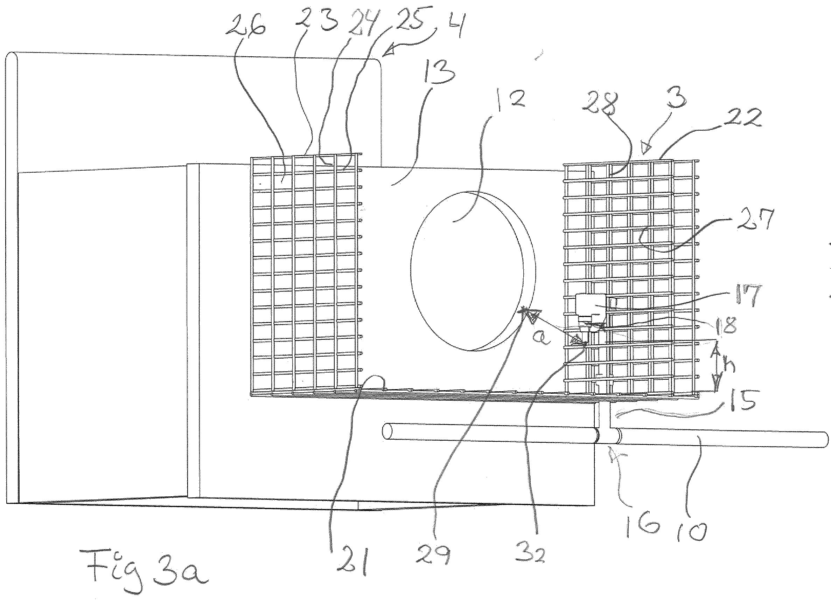

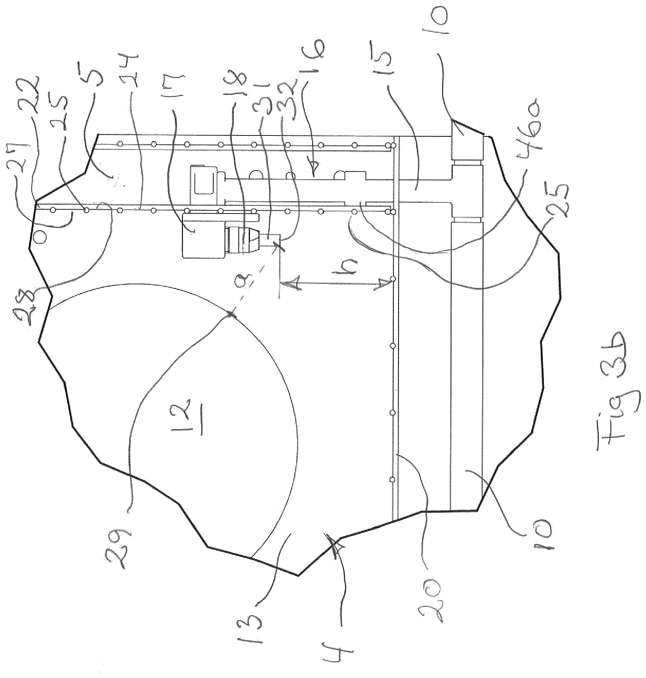

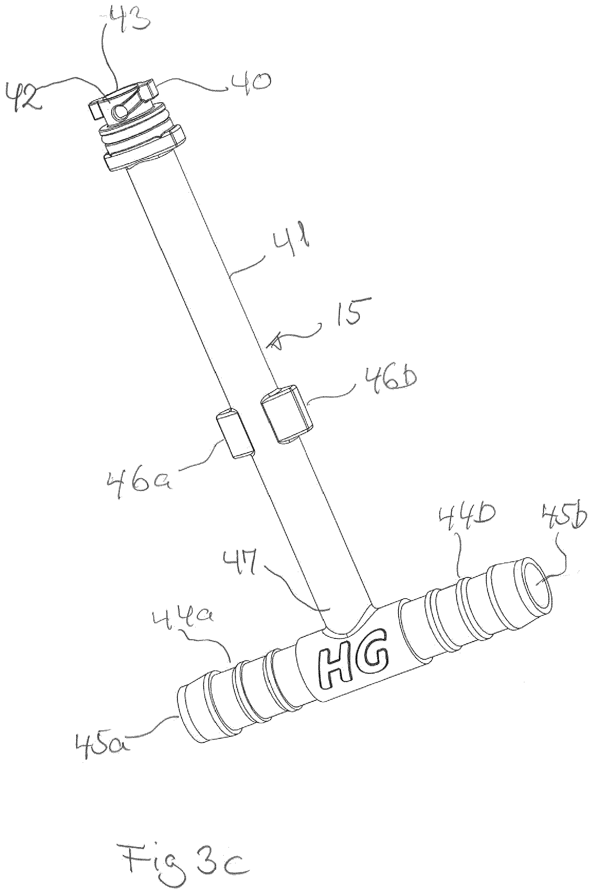

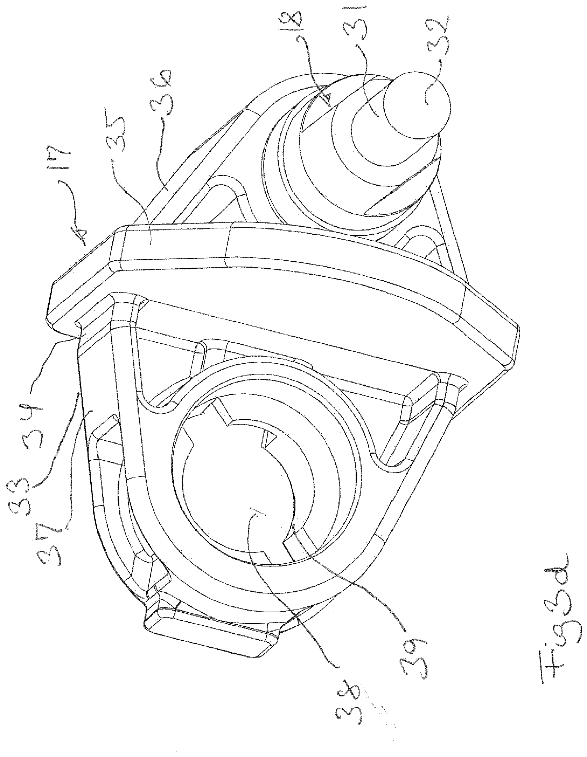

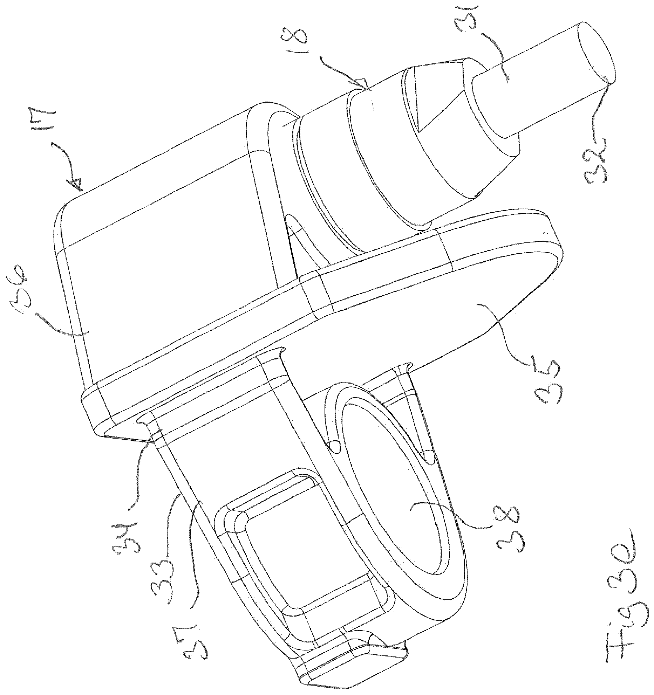

The mink farming plant 1 shown schematically in Fig. 1 comprises two parallel rows 2a, 2b of cages 3 with attached nest boxes 4, said rows being separated by an aisle 7, said cages being arranged mutually spaced 5, said mink farming plant further comprising a drinking water system 6, particularly a water circulating drinking water system. The nest box is arranged in connection with the front wall 11 of the cage and has, at the rear wall 13, a nest box opening 12, which is not shown in Fig. 1 but shown in Fig. 2, allowing the minks to move freely between the nest box and the cage. The drinking water system 6 comprises a water tank 8, in which a non-shown immersion pump is arranged, from which a supply line 9 runs. From the supply line 9, a drinking water line 10 is branched-off running along the rows 2a, 2b of cages 3 below these and, seen from above, close to the front walls 11 of the cages. From the drinking water line 10, a branch-off line 15 is branched off from each cage, said branch-off line being in the presently preferred embodiment a tube element of the drinking valve arrangement 16, said tube element extending upwards in the space 5 between two cages 2. At the upper end, the tube element is connected to the coupling element 17 being also part of the drinking valve arrangement, said coupling element having a drinking valve 18 being arranged in the cage as shown in Figs. 2 and 3 and as will be described in detail below. In Fig. 1, the drinking water line 10 runs in a U-shape as seen from above and is connected to a return line 14 leading water back to the tank 8. It should be understood that in practice, each row 2a, 2b of cages 3 contains significantly more cages than the twelve shown in Fig. 1 and that a mink farm usually has more rows of cages than the two shown. Hence, today, mink farms usually have more than 100 cages in each row and often more than 1000 cages in total.

As is most clear from Figs. 2 and 3a and 3b, each cage contains the previously mentioned front wall 11, a rear wall 19, a top wall 20, a bottom wall 21 and opposite side walls 22,23. All walls are usually wire-mesh walls with intersecting mesh wires 24,25 defining rectangular mesh openings 26 with a mesh height and a mesh width as shown for the side walls 22,23 in Fig. 3a. The side walls 22,23 have an inner side 27 facing towards the cage 2 and an outer side 28 facing outwards. The rear wall 13 of the nest box 4 forms a lower part of the front wall 11 of the cage 3, and the nest box opening 12 shown in circular shape is of such a size that the minks, i.e. both the female adult mink and the kits, can move freely between the nest box and the cage.

As it appears from Figs. 3a and 3b and as previously mentioned, a drinking valve 18 of the drinking valve arrangement 16 is arranged on the inner side 27 of the side wall 22.

The dinking valve 18 has, at an upper end, a non-shown upper inlet, and at a lower end, a downwards facing outlet 30 and in connection thereto a downward-facing protruding activating pin 31 with a lower end 32. The valve 18 is of the type supplying liquid, at least a drop of liquid, by a light lateral touch or force applied on the activating pin. The lower end 32 of the activating pin 31 is arranged in a distance h to the bottom wall 21 of the cage 3 of between 1 to 8 cm, such as 2 to 6 cm, and particularly 3 to 5 cm, so that the kits can easily touch it and thus activate the valve to release water. Moreover, the valve is arranged so that the outer end 32 of the activating pin 31 is positioned in a distance a to the nearest point 29 of the edge of the opening 12 of the nest box 4 of no more than 20 cm so that the kits do not have to move too far away from the nest box to drink from the valve.

The above-mentioned first and presently preferred drinking valve arrangement 16 is explained below with reference to Figs. 3a to 3e. The coupling element 17 of the drinking valve arrangement 16, in which the drinking valve 18 is received with protruding activating pin 31, has a transverse part 33 in relation to the longitudinal axis of the activating pin 31 of the drinking valve, said transverse part comprising a first section 36, in which the valve 18 is received, and a second section 37, which is arranged for insertion in a mesh opening and which is separated from the first section 36 by a protruding flange 35, chest or protruding area having a transverse dimension larger than the transverse dimension of the mesh opening. Adjacent the flange, the second section 37 has a portion or area 34 with an outer outline corresponding to the mesh opening so that the second section 37 of the transverse part 33 of the coupling element 17 can be inserted and received in a controlling and positioning manner in the mesh opening secured against turning. The protruding flange 35 of the coupling element abuts the inner side of the side wall when the second section has been fully inserted into the mesh opening.

The transverse part 33 of the coupling element 17 has a non-shown interior connecting channel being, at the one end, in liquid connection with the inlet of the valve 18 and being, at a second end, provided with a coupling element inlet 38 having an axis substantially parallel to the axis of the activating pin and thus substantially perpendicular to the transverse part 33. A bayonet coupling connection female part 39 is connected to the coupling element inlet and adapted to be connected to the bayonet coupling connection male part 40 on the tube element 15.

The tube element 15 is substantially T-shaped with an oblong body 41, said body having, at a first end 42, an axial tube element outlet 43 with the above-mentioned bayonet coupling connection male part 40, and having, at an opposite second end 47, opposing laterally protruding arms 44a, 44b with inlets 45a, 45b at the opposing ends of the arms. The arms are adapted to be connected to the drinking water line 10. The body 41 is provided with projections 46a, 46b positioned diametrically opposite each other and positioned on the same level as the oblong body and the arms. The projections 46a, 46b are positioned in such a distance to the male part and have such a radial extent that when the male part has been turned into a locking engagement with the female part in the coupling element 17, and the second section 37 of the transverse part 33 of the coupling element 17 has been inserted in a controlling and positioning manner in a mesh opening, one of the projections 46a, 46b abuts a horizontal wire mesh 25 whereby the drinking valve arrangement 16 is secured to the side wall by the protruding flange 35 and said one projection squeezing around the side wall. Conversely, the projections steer clear off the wire-mesh wall in the insertion position of the male part 40 prior to being turned into locking engagement with the female part 39. It should be further noted that when the drinking arrangement is secured to the side wall, the leg of the tube element extends in the longitudinal direction of the row of cages, and that the tube element is of such a length that the arms 44a, 44b are positioned outside the bottom wall of the cage and can be connected to or are connected to the drinking water line running along the cages 10 in the row of cages.

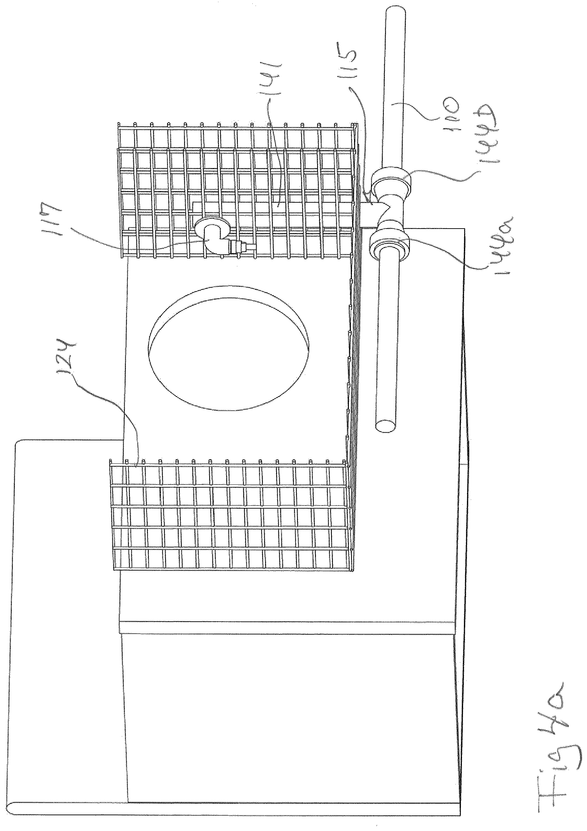

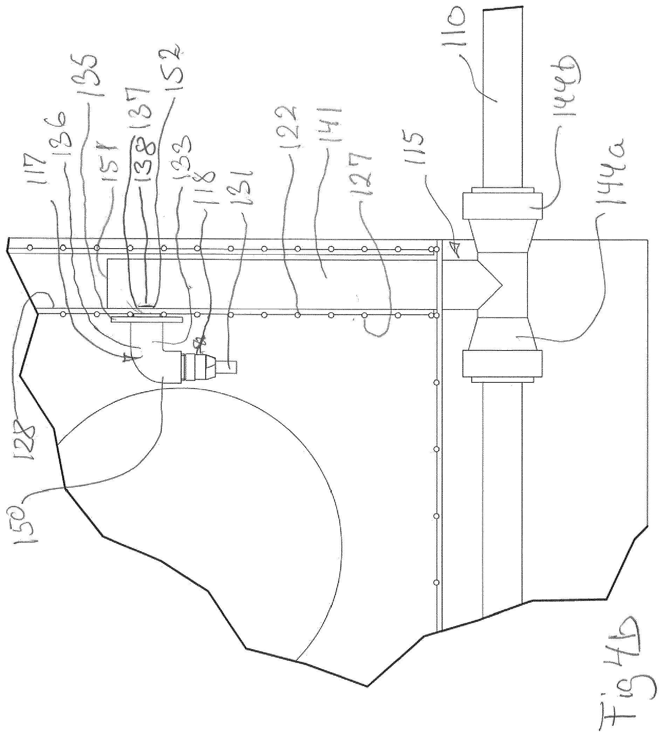

Figs. 4a and 4b show a second version of a drinking valve arrangement, which, like the first embodiment, comprises a coupling element 117 and a sealingly and detachably connected tube element 115 being substantially T-shaped. The coupling element 117 has a transverse part 133 which has, at an end positioned in the cage, a substantially perpendicular bent branch part 150. In an end surface of the bent branch part 150, a drinking valve 118 is received, said drinking valve having an upper inlet and a downward-facing outlet and in connection with the outlet, a protruding and downward-facing activating pin 131 for releasing at least one drop of liquid by a light touch or lateral force. The transverse part 133 comprises a first section 136 comprising the bend branch part 150 and a second section 137 with such an outer outline that it can extend through a mesh opening. The second section is separated from the first section 136 by a protruding flange 135 with a transverse dimension larger than a mesh opening in the side wall 122. Inserting the second section through a mesh opening will cause the flange to abut the inner side 127 of the side wall 122 and thus prevent the first section from extending through the mesh opening.

At its outer end, the second section 137 has a connecting means, e.g. an external thread (not shown) adapted to be sealingly engaged with a matching connecting means, such as an inner thread in the oblong body 141 of the tube element 115. The transverse part 133 is provided with an inner, not shown, connecting channel connecting the inlet of the valve 118 with a coupling element inlet 138 positioned in connection with the connecting means at the outer end of the second section 137 of the transverse part 133. The body 141 of the tube element has a closed upper end 151 and a radial tube element outlet opening 152 in connection with the matching connecting means.

The body 141 of the tube element 115 has, at its lower end, arms 144a and 144b adapted to be connected with the drinking water line 110.

The second version of the drinking valve arrangement 116 is mounted by inserting the second section 137 of the coupling element through a mesh opening and bring the connecting means of the second section to engage the matching connecting element of the tube element. If the connecting means is a thread, the coupling element 117 is turned until the flange 135 thereof abuts the inner side 127 of the side wall 122, and the body 141 of the tube element 115 abuts the outer side 128 of the side wall 122, and the activating pin 131 of the dinking valve 118 131 faces downwards.

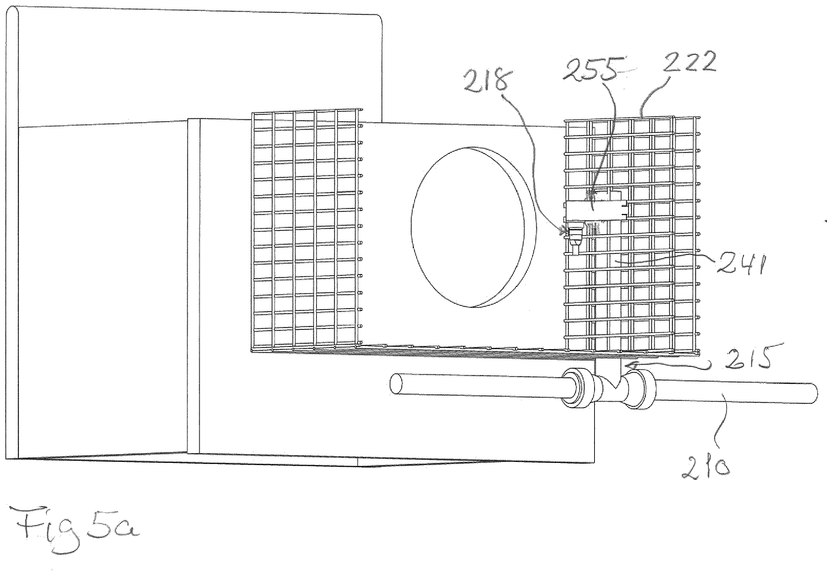

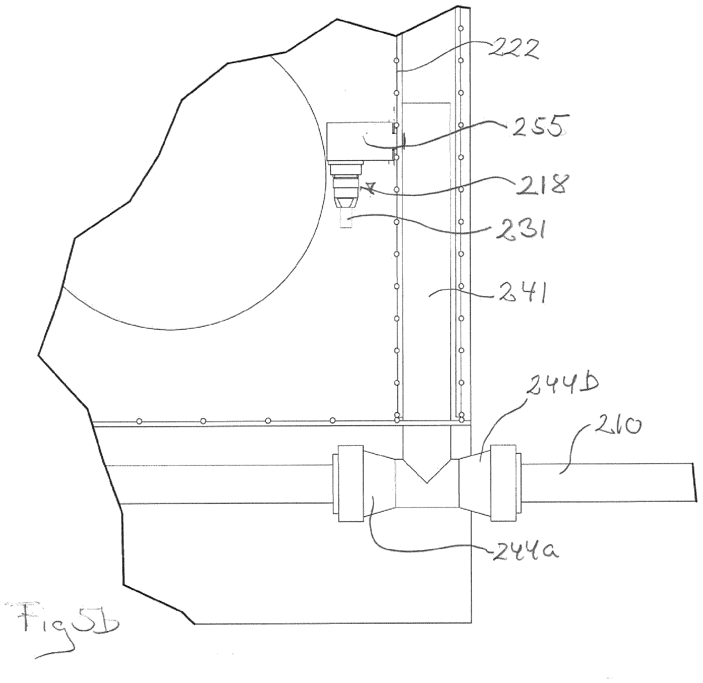

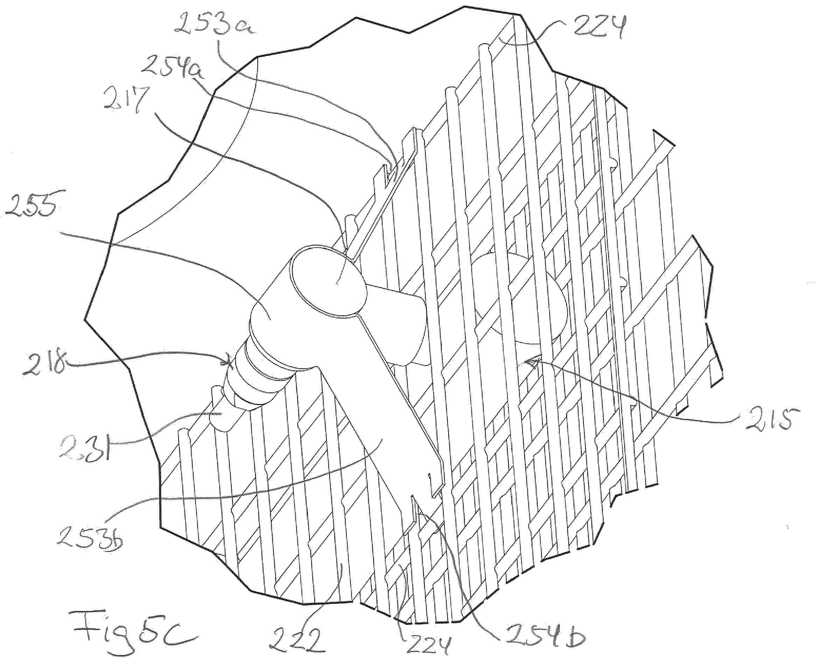

Figs. 5a-5c show a third version of a drinking valve arrangement 215, where a drinking valve 218 of the previously mentioned type is arranged in a coupling element 217 connected to a central area of a clamp 255 made from a resilient material, e.g. spring steel. From the central area, two connecting arms 253a, 253b protrude outwards under the formation of an obtuse angle. Each connecting arm has, at its outer end, a V-shaped groove 254a, 254b adapted to receive a mesh wire. The arms are dimensioned and adapted to be capable of bringing the grooves into secured engagement with vertical mesh wires 224, in between which two vertical mesh wires are arranged as shown in Fig. 5c. In order to provide the above-mentioned securing engagement, the arms 253a and 253b are compressed for receiving the mesh wires in the respective grooves and then allowed to bend outwards for a securing engagement with the wire meshes and thus the side wall 222. The arms are positioned in a plane perpendicular to the activating pin 231 of the drinking valve 218 231, said activating pin facing downwards in the mounted condition of the coupling part. Without being specific, the coupling element 217 has a non-shown inner connecting channel connecting the inlet of the valve to a coupling element inlet. As explained with reference to the previous embodiment, a connection means is provided in connection with the coupling element inlet, said connecting means being adapted to be securely engaged with a matching connection means provided in connection with a tube element outlet shaped radially in the oblong body 241 of the tube element. By this embodiment, the interactive connecting means is preferably of the snap-action coupling type. The body 241 of the tube element is closed at the upper end and has, at the bottom end, arms 241a, 241b protruding outwards in opposite directions and is adapted to be connected to the drinking water line 210.

**LIST OF REFERENCE NUMERALS**

| | |
|---|---|
| 1 | Mink farming plant |
| 2a | Row of cages |
| 2b | Row of cages |
| 3 | Cage |
| 4 | Nest box |
| 5 | Space |
| 6 | Drinking water system |
| 7 | Aisle |
| 8 | Water tank |
| 9 | Supply line |
| 10,110,210 | Drinking water line |
| 11 | Front wall |
| 12 | Nest box opening |
| 13 | Nest box rear wall |
| 14 | Return line |
| 15,115,215 | Branch-off line/tube element |
| 16,116,216 | Drinking valve arrangement |
| 17,117,217 | Coupling element |
| 18,118,218 | Drinking valve |
| 19 | Rear wall |
| 20 | Top wall |
| 21 | Bottom wall |
| 22,122,222 | Side wall |
| 23 | Side wall |
| 24, 124, 224 | Vertical mesh wire |
| 25 | Horizontal mesh wire |
| 26 | Mesh opening |
| 27,127,227 | Inner face |
| 28,128,228 | Outer face |
| 29 | Nearest point of edge |
| 30 | Valve outlet |
| 31,131,231 | Activating pin |
| 32 | Lower end |
| 33,133 | Transverse part |
| 34 | portion/area |
| 35,135 | flange |
| 36,136 | First section |
| 37,137 | Second section |
| 38,138 | Coupling element inlet |
| 39 | Female part |
| 40 | Male part |
| 41,141,241 | Oblong body |
| 42 | first (upper) end |
| 43 | Tube element outlet |
| 44a, 144a,244a | arm |
| 44b, 144b, 244b | arm |
| 45a and 45b | inlet |
| 46a | Projection |
| 46b | Projection |
| 47 | Second end |
| 150 | Bent branch part |
| 151 | Upper end |
| 152 | Tube element outlet opening |
| 253a | Connection leg |
| 253b | Connection leg |
| 254a | groove |
| 254b | groove |
| 255 | clamp |
| a | distance |
| h | height |

## Claims

1. A mink farming plant comprising:
- at least one longitudinal row (2a,2b) of mutually laterally spaced mink cages (3), each having a front wall (11), a rear wall (19), a top wall (20), a bottom wall (21) and opposite side walls (22,122,222;23), at least the side walls being wire-mesh walls with crossing wires (24,124,224:25) defining mesh openings (26), preferably rectangular mesh openings, with a mesh width and a mesh height, and each cage having an inner side (27, 127, 227) facing the interior of the cage and an outer side (28, 128, 228) facing outwards, and where a nest box (4) is attached to the front wall (11), the nest box having a nest box bottom and a nest box rear wall (13) with a nest box opening (12), such as a circular opening, of such a size that both kits and full-grown minks are free to move between the nest box (4) and the cage (3),
- a drinking water line (10,110,210) running along the row (2a,2b) of cages (2), said line being part of a drinking water system, preferably a drinking water circulation system, said drinking water system comprising a pressure inducing means, such as a pump, for supplying the drinking water line with water under pressure, and
- a drinking valve (18,118,218) comprising an inlet at a first end and an outlet at a second opposite end, said inlet being arranged and secured on the inner side (27,127,227) of one of the side walls (22,122,222;23) of the cages (3) outside the nest box, the inlet of said drinking valve being connected to the drinking water line (10,110,210) via a branch-off line (15,115,215) branched off from said drinking water line, said drinking water valve further comprising the downward-facing outlet (30) and in connection therewith a downward-facing protruding activating pin (31,131,231), and where the valve is configured for being opened by a light axial and/or lateral touch or force applied on the activating pin, and as a result of the opening of the valve water is delivered at least in the form of a drop of water, said activating pin (31,131,231) having a lower end (21) positioned 1 to 8 cm, such as 2 to 6 cm, or 3 to 5 cm, above the bottom wall of the cage and in a distance to the nearest point (29) of the edge of the nest box opening (12) of no more than 20 cm, such as of no more 15 cm, of no more than 12.5 cm or of no more of 10 cm.

2. A mink farming plant according to claim 1, where the valve (18,118,218) is connected to the branch-off line (15,115,215) via a coupling element (17,117,217) with a connecting channel connecting the inlet of the valve to the interior of the branch-off line.

3. A mink farming plant according to one or more of the preceding claims, where the branch-off line (15,115,215) branched off from the drinking water line (10,110,210) is positioned in the space defined by the side wall (22,122,222) on which the valve (18,118,218) is arranged and the adjoining side wall of the adjacent cage (3) in the row (2a,2b) of cages.

4. A mink farming plant according to claim 2, where a part (37,137) of the coupling element (17,117) protrudes through a mesh opening (26) in the side wall.

5. A mink farming plant according to claim 4, where a portion of the part (37,137) of the coupling element (17,117) protruding through a mesh opening in the side wall (22,122) has an outer profile that substantially corresponds to the shape of the mesh opening and fits closely therein.

6. A mink farming plant according to claim 4 or 5, where the coupling element (17,117) in connection with the part of the coupling element protruding through the mesh opening has a flange (35,135), a chest or projecting area abutting against at least two opposite mesh wires on the inner side (27,127) of the side wall (22,122).

7. A mink farming plant according to claim 2, where the connection between the coupling element (17) and the branch-off line (15) comprises a male part of the coupling element, said male part being sealingly and detachably connected to a female part (39) of the branch-off line or vice versa.

8. A mink farming plant according to claim 7, where the connection between the male part and the female part is configured to move an area or several areas of the coupling element and the branch-off line towards each other to secure engagement with an area of the intervening wire mesh.

9. A mink farming plant according to claim 7 or 8, where the branch-off line comprises a tube element (15, 115, 215) being provided with the female part that is sealingly and detachably connected to the male part on the part of the coupling element protruding through a mesh opening or vice versa.

10. A mink farming plant according to claim 9, where the coupling element (17) has a downward-facing female part (39), and the tube element (15,115,215) is substantially T-shaped with an oblong body (41,141,241), which, at a first and upper end, has a male part (40) engaging said female part (39), and, at an opposite second and lower end, has laterally protruding arms (44a,144a,244a;44b,144b,244b) connected to the water line or vice versa, and where at least a part, such as a lateral protruding part (46a,46b) of the body (41), abuts the outer side (28) of the wire wall (22).

11. A mink farming plant according to more or more of the preceding claims 7-10, where the connection between the male part and the female part is a threaded connection, e.g. a thread with a large pitch, or a bayonet coupling connection.

12. A mink farming plant according to claim 1, where the drinking water system further comprises a water tank (8) to which a supply line (9) and a return line (14) are connected, and where the water line and optionally further water lines are connected in parallel between the supply and return lines.

13. A mink farming plant according to claim 1 or 12, where the drinking water line (10,110,210) runs along the underside of the cages (3) and preferably vertically below the drinking valves (18,118,218) to ensure that the distance from the branch-off lines to the valves is as short as possible.

14. A mink farming plant according to any of the preceding claims 1 to 3 and 13, where the drinking valve (18,118,218) is arranged such that the downward-facing activating pin (31,131,231) forms an angle of between 0 and 45°, such as between 0 and 30° or between 0 and 15°, relative to vertical.

## Patentansprüche

1. Nerzzuchtanlage, Folgendes umfassend:
- mindestens eine Längsreihe (2a, 2b) von gegenseitig lateral beabstandeten Nerzkäfigen (3), wobei jeder eine Vorderwand (11), eine Hinterwand (19), eine Oberwand (20), eine Bodenwand (21) und gegenüberliegende Seitenwände (22,122, 222; 23) aufweist, wobei mindestens die Seitenwände Drahtgeflecht-Wände mit kreuzenden Drähten (24, 124, 224; 25) sind, die Geflechtöffnungen (26), vorzugsweise rechteckige Geflechtöffnungen mit einer Geflechtbreite und einer Geflechthöhe definieren, und jeder Käfig eine Innenseite (27, 127, 227) aufweist, die zum Inneren des Käfigs gerichtet ist, und eine Außenseite (28, 128, 228), die zur Außenseite gerichtet ist, und wobei ein Nistkasten (4) an der Vorderwand (11) angebracht ist, wobei der Nistkasten einen Nistkastenboden und eine Nistkastenhinterwand (13) mit einer Nistkastenöffnung (12), wie eine kreisförmige Öffnung von solch einer Größe aufweist, dass beide, Kits und ausgewachsene Nerze frei sind, sich zwischen dem Nistkasten (4) und dem Käfig (3) zu bewegen,
- eine Trinkwasserleitung (10, 110, 210), die entlang der Reihe (2a, 2b) von Käfigen (2) verläuft, wobei die Leitung Teil eines Trinkwassersystems, vorzugsweise eines Trinkwasserzirkulationssystems ist, wobei das Trinkwassersystem ein druckinduzierendes Mittel, wie eine Pumpe zum Versorgen der Trinkwasserleitung mit Wasser unter Druck umfasst, und
- ein Trinkventil (18, 118, 218), das einen Einlass an einem ersten Ende und einen Auslass an einem zweiten gegenüberliegenden Ende umfasst, wobei der Einlass an der Innenseite (27, 127, 227) von einer der Seitenwände (22, 122, 222; 23) der Käfige (3) außerhalb des Nistkastens angeordnet und befestigt ist, wobei der Einlass des Trinkventils über eine Abzweigleitung (15, 115, 215) mit der Trinkwasserleitung (10, 110, 210) verbunden ist, die von der Trinkwasserleitung abgezweigt ist, wobei das Trinkwasserventil weiter den nach unten gerichteten Auslass (30) und, in Verbindung damit, einen nach unten gerichteten vorspringenden Aktivierungsstift (31, 131, 231) umfasst, und wobei das Ventil konfiguriert ist, um durch eine leichte axiale und/ oder laterale Berührung oder eine Kraft geöffnet wird, die an den Aktivierungsstift angelegt wird, und als Ergebnis der Öffnung des Ventils Wasser mindestens in Form eines Wassertropfens abgegeben wird, wobei der Aktivierungsstift (31, 131, 231) ein unteres Ende (21) aufweist, das 1 bis 8 cm, so wie 2 bis 6 cm oder 3 bis 5 cm oberhalb der Bodenwand des Käfigs, und in einem Abstand zum nächstgelegenen Punkt (29) der Kante der Nistkastenöffnung (12) von nicht mehr als 20 cm, so wie nicht mehr als 15 cm, nicht mehr als 12,5 cm oder nicht mehr als 10 cm positioniert ist.

2. Nerzzuchtanlage nach Anspruch 1, wobei das Ventil (18, 118, 218), über ein Kopplungselement (17, 117, 217) mit einem Verbindungskanal, mit der Abzweigungsleitung (15, 115, 215) verbunden ist, der den Einlass des Ventils mit dem Inneren der Abzweigungsleitung verbindet.

3. Nerzzuchtanlage nach einem oder mehr der vorstehenden Ansprüche, wobei die von der Trinkwasserleitung (10, 110, 210) abgezweigte Abzweigungsleitung (15, 115, 215) in dem Raum positioniert ist, der durch die Seitenwand (22, 122, 222), auf der das Ventil (18, 118, 218) angeordnet ist, und die angrenzende Seitenwand des nebenan liegenden Käfigs (3) in der Reihe (2a, 2b) von Käfigen definiert ist.

4. Nerzzuchtanlage nach Anspruch 2, wobei ein Teil (37, 137) des Kopplungselements (17, 117) durch eine Geflechtöffnung (26) in der Seitenwand hervorspringt.

5. Nerzzuchtanlage nach Anspruch 4, wobei ein Abschnitt des Teils (37, 137) des Kopplungselements (17,117), der durch eine Geflechtöffnung in der Seitenwand (22, 122) hervorspringt ein Außenprofil aufweist, das im Wesentlichen der Form der Geflechtöffnung entspricht und eng daran anliegt.

6. Nerzzuchtanlage nach Anspruch 4 oder 5, wobei das Kopplungselement (17, 117) in Verbindung mit dem Teil des Kopplungselements, das durch die Geflechtöffnung hervorspringt, einen Flansch (35, 135), eine Brust oder hervorspringenden Bereich aufweist, der an mindestens zwei gegenüberliegenden Geflechtdrähten an der Innenseite (27, 127) der Seitenwand (22, 122) anliegt.

7. Nerzzuchtanlage nach Anspruch 2, wobei die Verbindung zwischen dem Kopplungselement (17) und der Abzweigungsleitung (15) einen Steckteil des Kopplungselements umfasst, wobei der Steckteil abdichtend und abnehmbar mit einem Buchsenteil (39) der Abzweigungsleitung oder umgekehrt verbunden ist.

8. Nerzzuchtanlage nach Anspruch 7, wobei die Verbindung zwischen dem Steckteil und dem Buchsenteil konfiguriert ist, um einen Bereich oder verschiedene Bereiche des Kopplungselements und der Abzweigungsleitung zueinander zu bewegen, und einen Eingriff mit einem Bereich des dazwischenliegenden Drahtgeflechts zu sichern.

9. Nerzzuchtanlage nach Anspruch 7 oder 8, wobei die Abzweigungsleitung ein Rohrelement (15, 115, 215) umfasst, das mit dem Buchsenteil bereitgestellt ist, das abdichtend und abnehmbar mit dem Steckteil auf dem Teil des Kopplungselements, das durch eine Geflechtöffnung hervorspringt oder umgekehrt, verbunden ist.

10. Nerzzuchtanlage nach Anspruch 9, wobei das Kopplungselement (17) einen nach unten gerichteten Buchsenteil (39) aufweist, und das Rohrelement (15, 115, 215) im Wesentlichen T-förmig mit einem länglichen Körper (41, 141, 241) ist, der an einem ersten und oberen Ende einen Steckteil (40) aufweist, der in den Buchsenteil (39) eingreift, und an einem gegenüberliegenden zweiten und unteren Ende lateral hervorspringende Arme (44a, 144a, 244a; 44b, 144b, 244b) aufweist, die mit der Wasserleitung oder umgekehrt verbunden sind, und wobei mindestens ein Teil, wie ein lateraler hervorspringender Teil (46a, 46b) des Körpers (41), an der Außenseite (28) der Drahtwand (22) anliegt.

11. Nerzzuchtanlage nach mehr oder mehr der vorstehenden Ansprüche 7 bis 10, wobei die Verbindung zwischen dem Steckteil und dem Buchsenteil eine Gewindeverbindung, z.B. ein Gewinde mit einer großen Steigung, oder eine Bajonett-Kopplungsverbindung ist.

12. Nerzzuchtanlage nach Anspruch 1, wobei das Trinkwassersystem weiter einen Wassertank (8) umfasst, mit dem eine Versorgungsleitung (9) und eine Rückführleitung (14) verbunden sind, und wobei die Wasserleitung und optional weitere Wasserleitungen parallel zwischen der Versorgungs- und Rückführleitung verbunden sind.

13. Nerzzuchtanlage nach Anspruch 1 oder 12, wobei die Trinkwasserleitung (10, 110, 210) entlang der Unterseite der Käfige (3) und vorzugsweise vertikal unter den Trinkventilen (18, 118, 218) verläuft, um zu gewährleisten, dass der Abstand von den Abzweigungsleitungen zu den Ventilen so kurz wie möglich ist.

14. Nerzzuchtanlage nach einem der vorstehenden Ansprüche 1 bis 3 und 13, wobei das Trinkventil (18, 118, 218) angeordnet ist, sodass der nach unten gerichtete Aktivierungsstift (31, 131, 231) einen Winkel von zwischen 0 und 45°, so wie zwischen 0 und 30° oder zwischen 0 und 15° relativ zur Vertikalen bildet.

## Revendications

1. Installation de visonnière comprenant :
- au moins une rangée longitudinale (2a, 2b) de cages de vison espacées mutuellement latéralement (3) ayant chacun une paroi avant (11), une paroi arrière (19), une paroi supérieure (20), une paroi inférieure (21) et des parois latérales opposées (22, 122, 222 ; 23), au moins les parois latérales étant des parois grillagées ayant des fils de traversée (24, 124, 224; 25) définissant des ouvertures de maille (26), de préférence des ouvertures de maille rectangulaires, ayant une largeur de maille et une hauteur de maille et chaque cage ayant un côté interne (27, 127, 227) orienté vers l'intérieur de la cage et un côté externe (28, 128, 228) orienté vers l'extérieur, et où un nid (4) est fixé à la paroi avant (11), le nid ayant une partie inférieure de nid et une paroi arrière de nid (13) ayant une ouverture de nid (12), telle qu'une ouverture circulaire, d'une taille telle qu'à la fois des petits et des visons adultes sont libres de se déplacer entre le nid (4) et la cage (3),
- une conduite d'eau potable (10, 110, 210) s'étendant le long de la rangée (2a, 2b) de cages (2), ladite conduite faisant partie d'un système d'eau potable, de préférence un système de circulation d'eau potable, ledit système d'eau potable comprenant un moyen induisant une pression, tel qu'une pompe, pour alimenter la conduite d'eau potable en eau sous pression et
- une vanne pour boire (18, 118, 218) comprenant une entrée au niveau d'une première extrémité et une sortie au niveau d'une second extrémité opposée, ladite entrée étant agencée et fixée sur le côté interne (27, 127, 227) de l'une des parois latérales (22, 122, 222 ; 23) des cages (3) à l'extérieur du nid, l'entrée de ladite vanne pour boire étant raccordée à la conduite d'eau potable (10, 110, 210) par le biais d'une conduite de dérivation (15, 115, 215) ramifiée à partir de ladite conduite d'eau potable, ladite vanne pour boire comprenant en outre la sortie orientée vers le bas (30) et en liaison avec celle-ci, une tige d'activation en saillie orientée vers le bas (31, 131, 231) et où la vanne est configurée pour être ouverte par un léger toucher axial et/ou latéral ou une légère force axiale et/ou latérale appliquée sur la tige d'activation, et, à la suite de l'ouverture de la vanne, de l'eau est délivrée au moins sous la forme d'une goutte d'eau, ladite tige d'activation (31, 131, 231) ayant une extrémité inférieure (21) positionnée entre 1 et 8 cm, telle qu'entre 2 et 6 cm ou entre 3 et 5 cm, au-dessus de la paroi inférieure de la cage et à une certaine distance par rapport au point le plus près (29) du bord de l'ouverture de nid (12) et inférieure ou égale à 20 cm, telle qu'inférieure ou égale à 15 cm, inférieure ou égale à 12,5 cm ou inférieure ou égale à 10 cm.

2. Installation de visonnière selon la revendication 1, où la vanne (18, 118, 218) est raccordée à la conduite de dérivation (15, 115, 215) par le biais d'un élément de couplage (17, 117, 217) à un canal de liaison reliant l'entrée de la vanne à l'intérieur de la conduite de dérivation.

3. Installation de visonnière selon l'une ou plusieurs des revendications précédentes, où la conduite de dérivation (15, 115, 215) ramifiée depuis la conduite d'eau potable (10, 110, 210) est positionnée dans l'espace défini par la paroi latérale (22, 122, 222) sur laquelle la vanne (18, 118, 218) est disposée, et la paroi latérale adjacente de la cage adjacente (3) dans la rangée (2a, 2b) de cages.

4. Installation de visonnière selon la revendication 2, où une partie (37, 137) de l'élément de couplage (17, 117) fait saillie à travers une ouverture de maille (26) dans la paroi latérale.

5. Installation de visonnière selon la revendication 4, où une partie de la partie (37, 137) de l'élément de couplage (17, 117) faisant saillie à travers une ouverture de maille dans la paroi latérale (22, 122) présente un profil externe qui correspond sensiblement à la forme de l'ouverture de maille et s'adapte étroitement à l'intérieur de celle-ci.

6. Installation de visonnière selon la revendication 4 ou 5, où l'élément de couplage (17, 117) en liaison avec la partie de l'élément de couplage faisant saillie à travers l'ouverture de maille comporte un rebord (35, 135), une zone de poitrail ou en saillie venant en butée contre au moins deux grillages opposés sur le côté interne (27, 127) de la paroi latérale (22, 122).

7. Installation de visonnière selon la revendication 2, où le raccordement entre l'élément de couplage (17) et la conduite de dérivation (15) comprend une partie mâle de l'élément de couplage, ladite partie mâle étant raccordée de manière étanche et amovible à une partie femelle (39) de la conduite de dérivation ou vice versa.

8. Installation de visonnière selon la revendication 7, où le raccordement entre la partie mâle et la partie femelle est configuré pour déplacer une zone ou plusieurs zones de l'élément de couplage et de la conduite de dérivation l'une vers l'autre, ou les unes vers les autres, pour assurer une mise en prise avec une zone du grillage intermédiaire.

9. Installation de visonnière selon la revendication 7 ou 8, où la conduite de dérivation comprend un élément de tuyau (15, 115, 215) qui est pourvu de la partie femelle qui est raccordée de manière étanche et amovible à la partie mâle sur la partie de l'élément de couplage faisant saillie à travers une ouverture de maille ou vice versa.

10. Installation de visonnière selon la revendication 9, où l'élément de couplage (17) comporte une partie femelle orientée vers le bas (39) et l'élément de tuyau (15, 115, 215) est sensiblement en forme de T ayant un corps oblong (41, 141, 241) qui, au niveau d'une première extrémité supérieure, comporte une partie mâle (40) venant en prise avec ladite partie femelle (39) et, au niveau d'une seconde extrémité inférieure et opposée, comporte des bras faisant saillie latéralement (44a, 144a, 244a ; 44b, 144b, 244b) reliés à la conduite d'eau ou vice versa, et où au moins une partie, telle qu'une partie latérale en saillie (46a, 46b) du corps (41), vient en butée contre le côté externe (28) de la paroi de fil (22).

11. Installation de visonnière selon plusieurs ou plusieurs des précédentes revendications 7-10, où le raccordement entre la partie mâle et la partie femelle est un raccordement fileté, par exemple un filet ayant un pas important, ou un raccordement de couplage par baïonnette.

12. Installation de visonnière selon la revendication 1, où le système d'eau potable comprend en outre un réservoir d'eau (8) auquel une conduite d'alimentation (9) et une conduite de retour (14) sont raccordées, et où la conduite d'eau et, facultativement, des conduites d'eau supplémentaires sont raccordées en parallèle entre les conduites d'alimentation et de retour.

13. Installation de visonnière selon la revendication 1 ou 12, où la conduite d'eau potable (10, 110, 210) s'étend le long de la face inférieure des cages (3) et, de préférence, verticalement en dessous des vannes pour boire (18, 118, 218) pour assurer que la distance entre les conduites de dérivation et les vannes soit aussi courte que possible.

14. Installation de visonnière selon l'une quelconque des précédentes revendications 1 à 3 et 13, où la vanne pour boire (18, 118, 218) est agencée de telle sorte que la tige d'activation orientée vers le bas (31, 131, 231) forme un angle compris entre 8 et 45°, tel qu'entre 0 et 30° ou entre 0 et 15°, par rapport à la verticale.
